# EUROPÄISCHE PATENTANMELDUNG

(11) **EP 0 984 606 A2**
(43) Veröffentlichungstag der Anmeldung: **08.03.2000**
(21) Anmeldenummer: 99115772.8
(22) Anmeldetag: 10.08.1999
(51) Int. Cl.: H04M 1/02

(54) **Schwenkbare Telefonanlage**

(30) Priorität: 31.08.1998 DE 29815631 U
(71) Anmelder: SIEMENS AKTIENGESELLSCHAFT, 80333 München (DE)
(72) Erfinder: Schwind, Stefan, 82140 Olching (DE); Niggl, Heinz-Jürgen, 82343 Pöcking (DE); Buchberger, Georg, 81476 München (DE); Hannigan, Matthew-T, San Jose, CA 95123 (US)

(57) **Zusammenfassung**

Die Telefonanlage ist in einem Gehäuse untergebracht, das auf einem an einer Wand befestigten Wandtisch drehbar gelagert ist.

## Beschreibung

Die vorliegende Erfindung betrifft eine schwenkbare Telefonanlage.

Der vorliegenden Erfindung liegt die Aufgabe zugrunde, eine relativ schwere Telefonanlage mit einem Gewicht zwischen ungefähr 35 und 70 kg mit an der Rückwand befindlichen Kabelsteckern an einer Wand zu befestigen, wobei der Zugang zu den Kabelsteckern möglich sein soll.

Derartige schwere Telefonanlagen mit den obengenannten Gewichten werden, wenn sie als Wandanlagen dienen sollen, normalerweise mittels vorher an der Wand montierten Hilfskonstruktionen aufgehängt. Der Zugang zur Rückwand ist hierbei nicht möglich. Die ankommenden und abgehenden Kabel werden von vorne auf die Anlage aufgesteckt. Eine solche Konstruktion erfordert jedoch einen sehr hohen Kostenaufwand.

Die erfindungsgemäße schwenkbare Telefonanlage für eine Wandbefestigung ist daher dadurch gekennzeichnet, daß die Telefonanlage in einem Gehäuse untergebracht ist, das auf einem an einer Wand befestigten Wandtisch drehbar gelagert ist.

Ein besonderer Vorteil der schwenkbaren Telefonanlage gemäß der vorliegenden Erfindung besteht darin, daß eine normale Standanlage praktisch ohne Vorleistung als Wandanlage verwendet werden kann, wobei die rückwärtigen Kabelstecker zugänglich sind.

Eine vorteilhafte Ausgestaltung der erfindungsgemäßen Telefonanlage ist dadurch gekennzeichnet, daß das Gehäuse aus einer Anfangslage heraus, in der es sich unmittelbar parallel zur Wand befindet, um eine Drehachse schwenkbar ist, welche in einem auf einer Seite der Tischplatte des Wandtisches angeordneten Schlitz verschiebbar geführt ist, wobei der Schlitz schräg in Richtung auf die vordere Ecke der entsprechenden Seite der Tischplatte zuläuft.

Der erfindungsgemäße Schlitz ermöglicht es, daß sich während des Schwenkens der Drehpunkt laufend verlagert, so daß optimale Schwenkbedingungen geschaffen werden, was dazu führt, daß die erfindungsgemäße Telefonanlage mit nur einer Hand bequem herausgeschwenkt werden kann.

Weitere vorteilhafte Ausgestaltungen der erfindungsgemäßen Telefonanlage ergeben sich aus den Unteransprüchen sowie aus der nachfolgenden Beschreibung eines Ausführungsbeispiels der Erfindung anhand der Zeichnung.

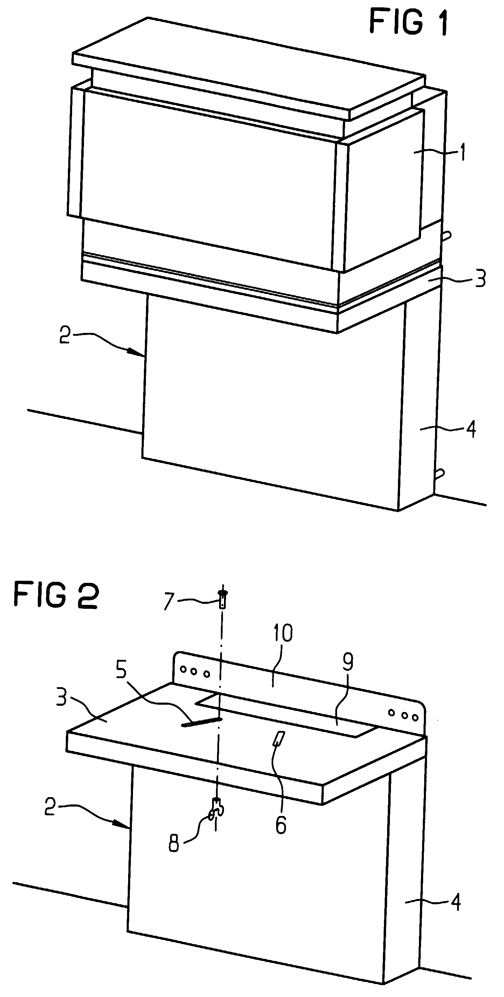

Es zeigen
Figur 1 eine perspektivische Ansicht einer schwenkbaren Telefonanlage gemäß der vorliegenden Erfindung im zurückgeschwenkten Zustand,
Figur 2 eine perspektivische Ansicht des Wandtisches der in Figur 1 gezeigten Telefonanlage,

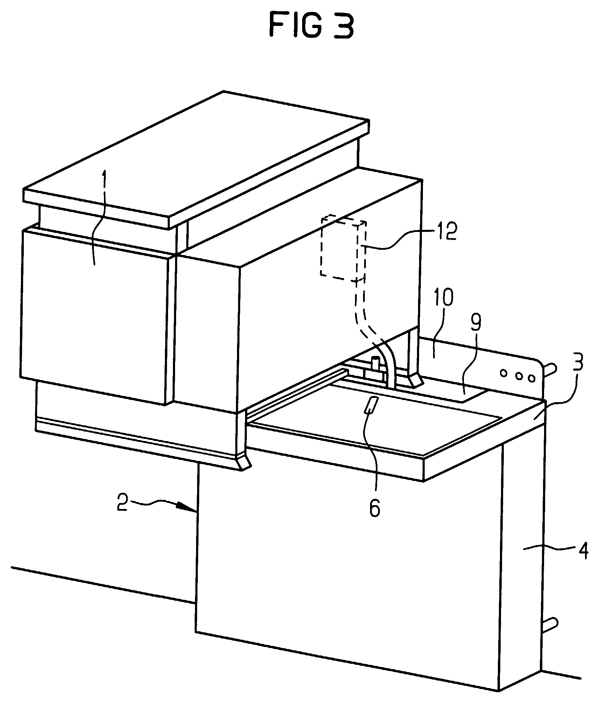

Figur 3 eine perspektivische Ansicht der in Figur 1 gezeigten Telefonanlage im ausgeschwenkten Zustand, und

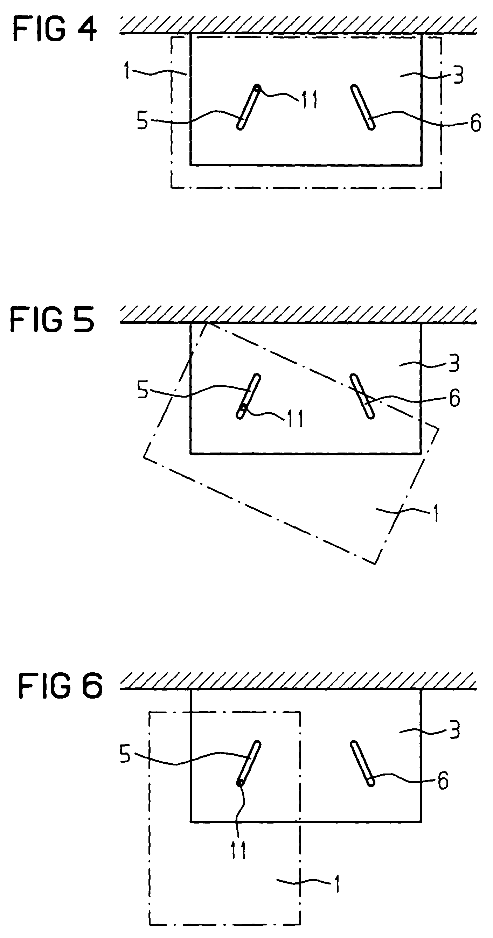

die Figuren 4 bis 6 schematisch verschiedene Schwenkpositionen der in Figur 1 gezeigten Telefonanlage.

Die eigentliche Telefonanlage ist in dem Gehäuse 1 untergebracht. Das Gehäuse 1 liegt auf einer Tischplatte 3 eines Wandtisches 2 auf. Der Wandtisch 2 ist mit seiner Tischplatte 3 über eine Wandbefestigung 10 direkt mit der Wand verbunden, und gleichzeitig wird der Tischplatte 3 von einer Konsole 4 abgestützt. Die Kabelzuführung erfolgt durch die Konsole und durch eine Kabelzuführungsöffnung 9 in der Tischplatte 3 zur Rückwand des Gehäuses 1, wo die ankommenden bzw. abgehenden Kabel über Kabelstecker 12 mit der Anlage verbunden sind.

Die Tischplatte 3 weist in ihrer Mitte rechts und links zwei Schlitze 5 und 6 auf, welche jeweils in Richtung auf die vordere Ecke der entsprechenden Seite der Tischplatte 3 zulaufen. Die Befestigung des Gehäuses 1 an dem Wandtisch 2 erfolgt mittels einer Schraube 7 und einer Mutter 8, wobei die Schraube 7 durch die Grundplatte (nicht gezeigt) des Gehäuses 1 und durch den jeweiligen Schlitz der Tischplatte 3 geführt ist.

Je nachdem, ob das Gehäuse nach links oder nach rechts geschwenkt bzw. gedreht werden soll, wird zur Befestigung des Gehäuses 1 der linke Schlitz 5 oder der rechte Schlitz 6 verwendet.

Im eingeschwenkten bzw. eingedrehten Zustand befindet sich das Gehäuse unmittelbar parallel zur Wand. Während der Drehbewegung bzw. während der Schwenkbewegung wandert die Drehachse 11 vom hinteren Schlitzende zum vorderen Schlitzende, so daß das Gehäuse 1 beim Herausschwenken zwei überlagerte Bewegungen ausführt, nämlich eine seitliche Bewegung und gleichzeitig eine Drehbewegung um die sich schräg nach vorn bewegende Drehachse 11. Auf diese Weise werden bei der erfindungsgemäßen Telefonanlage optimale Schwenkbedingungen geschaffen, so daß zum Ausschwenken bzw. zum Herausdrehen der Anlage lediglich eine Hand benutzt werden muß.

Zur leichteren Drehbarkeit kann überdies die Tischplatte 3 mit einer Gleitoberfläche versehen sein.

## Patentansprüche

1. Schwenkbare Telefonanlage,
**dadurch gekennzeichnet,**
daß die Telefonanlage in einem Gehäuse (1) untergebracht ist, das auf einem an einer Wand befestigten Wandtisch (2) drehbar gelagert ist.

2. Schwenkbare Telefonanlage nach Anspruch 1,
**dadurch gekennzeichnet,**
daß das Gehäuse (1) aus einer Anfangslage heraus, in der es sich unmittelbar parallel zur Wand befindet, um eine Drehachse (11) schwenkbar ist, welche in einem auf einer Seite der Tischplatte (3) des Wandtisches (2) angeordneten Schlitz (5, 6) verschiebbar geführt ist, wobei der Schlitz (5, 6) schräg in Richtung auf die vordere Ecke der entsprechenden Seite der Tischplatte (3) zuläuft.

3. Schwenkbare Telefonanlage nach Anspruch 2,
**dadurch gekennzeichnet,**
daß die Tischplatte (3) zwei Schlitze (5, 6) aufweist, die jeweils auf einer Seite der Tischplatte (3) schräg in Richtung auf die vordere Ecke der entsprechenden Seite der Tischplatte (3) zulaufen.

4. Schwenkbare Telefonanlage nach einem der Ansprüche 1 bis 3,
**dadurch gekennzeichnet,**
daß die Tischplatte (3) eine Gleitoberfläche aufweist.

5. Schwenkbare Telefonanlage nach einem der Ansprüche 1 bis 4,
**dadurch gekennzeichnet,**
daß die Tischplatte (3) im hinteren Bereich eine Kabeldurchführungsöffnung (9) aufweist.

6. Schwenkbare Telefonanlage nach einem der Ansprüche 1 bis 3,
**dadurch gekennzeichnet,**
daß die Tischplatte über eine Wandbefestigung (10) mit der Wand verschraubt ist und auf einer Konsole (4) gelagert ist.
